# EUROPEAN PATENT APPLICATION

(11) **EP 4 738 778 A1**
(43) Date of publication of application: **06.05.2026**
(21) Application number: 23942761.0
(22) Date of filing: 27.06.2023
(51) Int. Cl.: H04L 43/08

(54) **MODEL TEST METHOD, DEVICES, AND STORAGE MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Dehns Germany Partnerschaft mbB
(86) International application number: PCT/CN2023/102924
(87) International publication number: WO 2025/000237

(57) **Abstract**

The present disclosure relates to a model test method, devices, and a storage medium. The method comprises : determining whether predicted data output by a first model meets a first condition, wherein the first condition is a performance requirement for the predicted data, the predicted data is data obtained by means of the first model performing prediction according to first measured data, the first measured data is data obtained after a terminal device performs measurement on first information, and the first information is information sent by a network device to the terminal device. Thus, a first model can be tested or verified to determine whether the first model meets a first condition, thereby determining the performance and reliability of the model, achieving online verification and testing of the model, and improving the flexibility and reliability of model management.

## Description

### TECHNICAL FIELD

The present disclosure relates to the field of communication technology, and in particular to a model test method, a model test device and a storage medium.

### BACKGROUND

With the advancement of communication technology, predictive models have been introduced into communication systems, such as Artificial Intelligence (AI) models, Machine Learning (ML) models, or other models. Predictive models can obtain predicted data for certain scenarios to improve network performance. However, the reliability of the predicted data significantly impacts network performance; therefore, how to determine the reliability of the predicted data from predictive models is a pressing issue that needs to be addressed.

### SUMMARY

The present disclosure provides a model test method, a model test device, and storage medium.

According to a first aspect of the embodiments of the present disclosure, there is provided a model test method, including:
determining whether predicted data output by a first model meets a first condition; where the first condition is a performance requirement of the predicted data, the predicted data is data predicted by the first model based on first measurement data, the first measurement data is data obtained after a terminal device measures first information, and the first information is information sent from a network device to the terminal device.

According to a second aspect of the embodiments of the present disclosure, there is provided a model test method, including:
using a first model, performing prediction based on first information and obtaining predicted data; where the first information is information sent from a network device to a terminal device; and
sending second information, the second information including the predicted data, the predicted data being configured to determine whether the first model meets a first condition, the first condition being a performance requirement of the predicted data.

According to a third aspect of the embodiments of the present disclosure, there is provided a model test method, including:
a terminal device using a first model, performing prediction based on first information and obtaining predicted data; where the first information is information sent from a network device to the terminal device;
the terminal device sending second information to the network device, the second information including the predicted data, the predicted data being configured to determine whether the first model meets a first condition, the first condition being a performance requirement of the predicted data; and
the network device determining whether the predicted data output by the first model meets the first condition; where the predicted data is data obtained by the first model based on first measurement data, the first measurement data is data obtained after the terminal device measures the first information, and the first information is information sent from the network device to the terminal device.

According to a fourth aspect of the embodiments of the present disclosure, there is provided a network device, including:
a processing module configured to determine whether predicted data output by a first model meets a first condition; where the first condition is a performance requirement of the predicted data, the predicted data is data predicted by the first model based on first measurement data, the first measurement data is data obtained after a terminal device measures first information, and the first information is information sent by the network device to the terminal device.

According to a fifth aspect of the embodiments of the present disclosure, there is provided a terminal device, including:
a processing module configured to use a first model, perform prediction based on first information and obtain predicted data; where the first information is information sent by a network device to the terminal device; and
a transceiver module configured to send second information, where the second information includes the predicted data, the predicted data is configured to determine whether the first model meets a first condition, the first condition is a performance requirement of the predicted data.

According to a sixth aspect of the embodiments of the present disclosure, there is provided a network device, including one or more processors; where the network device is configured to execute the optional implementations according to the first aspect.

According to a seventh aspect of the embodiments of the present disclosure, there is provided a terminal device, including one or more processors; where the terminal device is configured to execute the optional implementations according to the second aspect.

According to an eighth aspect of the embodiments of the present disclosure, there is provided a communication system, including a terminal device and a network device, where the network device is configured to implement the method as described in the optional implementations of the first aspect, and the terminal device is configured to implement the method as described in the optional implementations of the second aspect.

According to a ninth aspect of the embodiments of the present disclosure, there is provided a storage medium storing instructions, when the instructions are executed on a communication device, the communication device is configured to execute the method according to the optional implementations of the first aspect or the second aspect.

The technical solutions provided by the embodiments of the present disclosure can include the following beneficial effects: determining whether predicted data output by a first model meets a first condition; where the first condition is performance requirement of the predicted data, the predicted data is data predicted by the first model based on first measurement data, the first measurement data is data obtained after a terminal device measures first information, and the first information is information sent from a network device to the terminal device. In this way, the first model can be tested or verified to determine whether the first model meets the first condition, thereby determining performance and reliability of the model, realizing online verification and test of the model, and improving the flexibility and reliability of model management.

It should be understood that the above general description and the following detailed description are merely exemplary and explanatory and do not limit the present disclosure.

### BRIEF DESCRIPTION OF THE DRAWINGS

To more clearly illustrate the technical solutions in the embodiments of the present disclosure, the accompanying drawings required for describing the embodiments are introduced below. These drawings are merely some embodiments of the present disclosure and do not impose specific limitations on the scope of protection of the present disclosure.
FIG. 1A is a schematic diagram of an architecture of a communication system according to an embodiment of the present disclosure.
FIG. 1B is a schematic diagram of a beam prediction scenario according to an embodiment of the present disclosure.
FIG. 2A is a flowchart illustrating a model test method according to an embodiment of the present disclosure.
FIG. 2B is a flowchart illustrating a model test method according to an embodiment of the present disclosure.
FIG. 3A is a flowchart illustrating a model test method according to an embodiment of the present disclosure.
FIG. 3B is a flowchart illustrating a model test method according to an embodiment of the present disclosure.
FIG. 3C is a flowchart illustrating a model test method according to an embodiment of the present disclosure.
FIG. 3D is a flowchart illustrating a model test method according to an embodiment of the present disclosure.
FIG. 4A is a flowchart illustrating a model test method according to an embodiment of the present disclosure.
FIG. 4B is a flowchart illustrating a model test method according to an embodiment of the present disclosure.
FIG. 4C is a flowchart illustrating a model test method according to an embodiment of the present disclosure.
FIG. 4D is a flowchart illustrating a model test method according to an embodiment of the present disclosure.
FIG. 5 is a flowchart illustrating a model test method according to an embodiment of the present disclosure.
FIG. 6 is a flowchart illustrating a model test method according to an embodiment of the present disclosure.
FIG. 7A is a structural schematic diagram of a terminal device according to an embodiment of the present disclosure.
FIG. 7B is a structural schematic diagram of a network device according to an embodiment of the present disclosure.
FIG. 8A is a structural schematic diagram of a communication device according to an embodiment of the present disclosure.
FIG. 8B is a structural schematic diagram of a chip according to an embodiment of the present disclosure.

### DETAILED DESCRIPTION

The present disclosure provides a model test method, a model test device, and a storage medium.

In a first aspect, one or more embodiments of the present disclosure provide a model test method, including:
determining whether predicted data output by a first model meets a first condition; where the first condition is a performance requirement of the predicted data, the predicted data is data predicted by the first model based on first measurement data, the first measurement data is data obtained after a terminal device measures first information, and the first information is information sent from a network device to the terminal device.

In the above embodiments, the first model can be tested or verified to determine whether the first model meets the first condition, thereby determining performance and reliability of the model, realizing online verification and test of the model, and improving the flexibility and reliability of model management.

In conjunction with some embodiments of the first aspect, in some embodiments, the method further includes:
receiving second information sent by the terminal device, the second information including the predicted data.

In the above embodiments, the first model can be tested or verified based on the predicted data or the first measurement data, thereby adapting to model test needs in different scenarios.

In conjunction with some embodiments of the first aspect, in some embodiments, the method further includes:
sending third information to the terminal device; the third information indicating whether the first model can be used by the terminal device.

In the above embodiments, in a case that the first model meets the first condition, the terminal device can be instructed to determine that the first model can be used, thereby ensuring the reliability of models added or updated by the terminal device.

In conjunction with some embodiments of the first aspect, in some embodiments, the method further includes:
receiving fourth information; the fourth information is configured to trigger the network device to send first information, the fourth information includes a first model identifier of the first model;
determining that the first model meets a test initiation condition based on the fourth information, and sending the first information to the terminal device.

In the above embodiments, the terminal device can actively trigger model test, thereby improving the flexibility of model test.

In conjunction with some embodiments of the first aspect, in some embodiments, the test initiation condition includes at least one of:
the first model has not been tested;
the first model is not in a model management set; the model management set includes models that have already been tested;
the fourth information is configured to indicate the execution of a test for the first model.

In the above embodiments, initiating model test when the test initiation condition is met can avoid invalid test and improve test reliability.

In conjunction with some embodiments of the first aspect, in some embodiments, the fourth information includes at least one of:
indication information for model update;
indication information for model addition;
indication information for model test.

In the above embodiments, model test can be triggered by at least one of the indication information for model update, the indication information for model addition, and the indication information for model test.

In conjunction with some embodiments of the first aspect, in some embodiments, the first model is a model for performing beam prediction, and the predicted data includes a predicted signal quality of a first beam, where the first beam is at least one beam configured by the network device for the terminal device;
the first condition includes a difference between the predicted signal quality and a first signal quality being within a first difference range; where the first signal quality is a signal quality of the first beam generated by the network device according to beam configuration information, or the first signal quality is a signal quality of the first beam actually measured by the terminal device.

In the above embodiments, the model performing beam prediction can be tested based on the difference in signal quality, improving the model reliability in beam prediction scenarios.

In conjunction with some embodiments of the first aspect, in some embodiments, the first model is a model for performing beam prediction, and the predicted data includes a second beam that is obtained from the beam prediction and meets a signal condition;
the signal condition includes at least one of:
a signal quality of the second beam is greater than or equal to a preset signal quality threshold;
the second beam is a beam with the best signal quality among multiple beams configured by the network device for the terminal device.

In the above embodiments, the model performing beam prediction can be tested based on the accuracy of the predicted beam, thereby improving the model reliability in beam prediction scenarios.

In conjunction with some embodiments of the first aspect, in some embodiments, the first condition is that the number of times a prediction success condition is met in N beam predictions is greater than or equal to M; where N is a natural number and M is a natural number less than or equal to N; the prediction success condition is that a second beam and a third beam are the same, and the second beam is a beam that meets the signal condition obtained from the beam prediction;
the third beam is a beam that meets the signal condition determined by the network device according to beam configuration information; or, the third beam is a beam that meets the signal condition determined according to second measurement data, where the second measurement data is data obtained by the terminal device after the terminal device measures multiple beams configured by the network device for the terminal device.

In the above embodiments, the model performing beam prediction can be tested based on the prediction accuracy of multiple predictions, improving the model reliability in beam prediction scenarios.

In conjunction with some embodiments of the first aspect, in some embodiments, the signal quality includes at least one of: RSRP, SINR, RSSI and RSRQ.

In the above embodiments, the first model can be tested based on at least one of multiple signal quality factors, improving the model reliability in beam prediction scenarios.

In conjunction with some embodiments of the first aspect, in some embodiments, the first information includes at least one of:
first data for testing the first model; and
a first signal for testing the first model.

In the above embodiments, the model can be tested using the first data and/or the first signal, thereby increasing the application scenarios for model test.

In a second aspect, one or more embodiments of the present disclosure provide a model test method, the method including:
using a first model, performing a prediction based on first information and obtaining predicted data; where the first information is information sent from a network device to a terminal device; and
sending second information, the second information including the predicted data, the predicted data being configured to determine whether the first model meets a first condition, the first condition being a performance requirement of the predicted data.

In the above embodiments, the first model can be tested or verified to determine whether the first model meets the first condition, thereby determining the performance and reliability of the model, realizing online verification and test of the model, and improving the flexibility and reliability of model management.

In conjunction with some embodiments of the second aspect, in some embodiments, the method further includes:
receiving the first information;
using the first model, performing prediction based on the first information and obtaining the predicted data includes:
   measuring the first information and obtaining the first measurement data;
   inputting the first measurement data into the first model and obtaining the predicted data output by the first model.

In conjunction with some embodiments of the second aspect, in some embodiments, the method further includes:
receiving third information; the third information indicating whether the first model can be used by the terminal device;
determining whether the first model can be used based on the third information.

In conjunction with some embodiments of the second aspect, in some embodiments, the method further includes:
sending fourth information; where the fourth information is configured to trigger the network device to send first information, and the fourth information includes a first model identifier of the first model.

In conjunction with some embodiments of the second aspect, in some embodiments, the fourth information includes at least one of:
indication information for model update;
indication information for model addition;
indication information for model test.

In conjunction with some embodiments of the second aspect, in some embodiments, the first model is a model for performing beam prediction, the predicted data includes a predicted signal quality of a first beam, and the first beam is at least one beam configured by the network device for the terminal device;
the first condition includes a difference between the predicted signal quality and a first signal quality being within a first difference range; where the first signal quality is a signal quality of the first beam generated by the network device according to beam configuration information, or the first signal quality is a signal quality of the first beam actually measured by the terminal device.

In conjunction with some embodiments of the second aspect, in some embodiments, the first model is a model for performing beam prediction, and the predicted data includes a second beam that is obtained from the beam prediction and meets a signal condition.

The signal condition includes at least one of:
a signal quality of the second beam is greater than or equal to a preset signal quality threshold;
the second beam is a beam with the best signal quality among a plurality of beams configured by the network device for the terminal device.

In conjunction with some embodiments of the second aspect, in some embodiments, the first condition is that a number of times a prediction success condition is met in N beam predictions is greater than or equal to M; where N is a natural number and M is a natural number less than or equal to N; the prediction success condition is that a second beam and a third beam are the same, and the second beam is a beam that meets the signal condition and is obtained from the beam prediction;
the third beam is a beam that meets the signal condition and is determined by the network device according to beam configuration information; or, the third beam is a beam that meets the signal condition and is determined according to second measurement data, where the second measurement data is data obtained by the terminal device after the terminal device measures multiple beams configured by the network device for the terminal device.

In conjunction with some embodiments of the second aspect, in some embodiments, the signal quality includes at least one of: RSRP, SINR, RSSI and RSRQ.

In conjunction with some embodiments of the second aspect, in some embodiments, the first information includes at least one of:
first data for testing the first model; and
a first signal for testing the first model.

In a third aspect, one or more embodiments of the present disclosure provide a model test method, including:
a terminal device using a first model, performing prediction based on first information, and obtaining predicted data; wherein the first information is information sent from a network device to the terminal device;
the terminal device sending second information to the network device, the second information including the predicted data, the predicted data being configured to determine whether the first model meets a first condition, the first condition being a performance requirement of the predicted data; and
the network device determining whether the predicted data output by the first model meets the first condition; where the predicted data is data obtained by the first model based on first measurement data, the first measurement data is data obtained after the terminal device measures first information, and the first information is information sent from the network device to the terminal device.

In the above embodiments, the first model can be tested or verified to determine whether the first model meets the first condition, thereby determining the performance and reliability of the model, realizing online verification and test of the model, and improving the flexibility and reliability of model management.

In a fourth aspect, one or more embodiments of the present disclosure provide a network device, which may include at least one of a transceiver module and a processing module; where the network device can be configured to execute optional implementations of the first aspect.

In a fifth aspect, one or more embodiments of the present disclosure provide a terminal device, which may include at least one of a transceiver module and a processing module; where the terminal device can be configured to execute optional implementations of the second aspect.

In a sixth aspect, one or more embodiments of the present disclosure provide a network device, which may include one or more processors; where the network device can be configured to execute optional implementations of the first aspect.

In a seventh aspect, one or more embodiments of the present disclosure provide a terminal device, which may include one or more processors; where the terminal device can be configured to execute optional implementations of the second aspect.

In an eighth aspect, one or more embodiments of the present disclosure provide a communication system, which may include a terminal device and a network device; where the network device is configured to execute the method described in the optional implementations of the first aspect, and the terminal device is configured to execute the method described in the optional implementations of the second aspect.

In a ninth aspect, one or more embodiments of the present disclosure provide a storage medium storing instructions that, when executed on a communication device, cause the communication device to execute the method described in the optional implementations of the first or second aspect.

In a tenth aspect, one or more embodiments of the present disclosure provide a program product that, when executed by a communication device, causes the communication device to perform the method described in the optional implementations of the first or second aspect.

In an eleventh aspect, one or more embodiments of the present disclosure provide a computer program that, when run on a computer, causes the computer to perform the method described in the optional implementations of the first or second aspect.

In a twelfth aspect, one or more embodiments of the present disclosure provide a chip or chip system. The chip or chip system includes a processing circuit configured to perform the method described in the optional implementations of the first or second aspect.

It is understood that the aforementioned terminal device, network device, communication device, communication system, storage media, program product, computer program, chip, or chip system can all be configured to perform the methods proposed in the embodiments of the present disclosure. Therefore, the beneficial effects achieved can be referred to the beneficial effects in the corresponding methods, and will not be repeated here.

Embodiments of the present disclosure provide a model test method, a model test device, and a storage medium. In some embodiments, the terms "model test method" and "information processing method", "communication method", etc., can be used interchangeably; the terms "model test device" and "information processing device", "communication device", "communication apparatus", etc., can be used interchangeably; the terms "information processing system", "communication system", etc., can be used interchangeably.

The present disclosure is not exhaustive, but merely illustrative of some embodiments, and is not intended to limit the scope of protection of the present disclosure. Unless otherwise specified, each step in a particular embodiment can be implemented as an independent embodiment, and the steps can be arbitrarily combined. For example, a solution after removing some steps in a particular embodiment can also be implemented as an independent embodiment, and the order of the steps in a particular embodiment can be arbitrarily interchanged. Furthermore, the optional implementations in a particular embodiment can be arbitrarily combined; moreover, the embodiments can be arbitrarily combined, for example, some or all steps of different embodiments can be arbitrarily combined, and a particular embodiment can be arbitrarily combined with the optional implementations of other embodiments.

In each embodiment of the present disclosure, unless otherwise specified or there is a logical conflict, the terminology and/or descriptions between the embodiments are consistent and can be mutually referenced. Technical features in different embodiments can be combined to form new embodiments according to their inherent logical relationships.

The terminology used in the embodiments of the present disclosure is only for the purpose of describing specific embodiments and is not intended to limit the present disclosure.

In the embodiments of the present disclosure, unless otherwise stated, elements expressed in the singular form, such as "a", "an", "the", "said", "the above-mentioned", "the foregoing", "this", etc., can mean "one and only one", or "one or more", "at least one", etc. For example, when using articles such as "a", "an", and "the" in translation, the noun following the article can be understood as either a singular or a plural expression.

In embodiments of the present disclosure, "multiple" refers to two or more.

In some embodiments, terms such as "a plurality of", "multiple", "at least one of", "one or more", etc. can be used interchangeably.

In some embodiments, the notation such as "at least one of A and B", "A and/or B", "A in one case, B in another", "in response to one case A, in response to another case B", etc., may include the following technical solutions depending on the situation: in some embodiments, A (executes A regardless of B); in some embodiments, B (executes B regardless of A); in some embodiments, execution is selected from A and B (A and B are selectively executed); in some embodiments, both A and B are executed. The same applies when there are more branches such as A, B, C, etc.

In some embodiments, the notation such as "A or B", etc., may include the following technical solutions depending on the situation: in some embodiments, A (executes A regardless of B); in some embodiments, B (executes B regardless of A); in some embodiments, execution is selected from A and B (A and B are selectively executed). The same applies when there are more branches such as A, B, C, etc.

The prefixes "first", "second", etc., used in the embodiments of the present disclosure are merely for distinguishing different descriptive objects and do not impose restrictions on the position, order, priority, quantity, or content of the descriptive objects. The description of the descriptive objects should be found in the claims or the context of the embodiments, and the use of prefixes should not constitute unnecessary restrictions. For example, if the descriptive object is a "field", the ordinal numbers preceding "field" in "first field" and "second field" do not restrict the position or order of the "fields", nor do "first" and "second" restrict whether the "fields" they modify are in the same message, nor do they restrict the order of "first field" and "second field." Similarly, if the descriptive object is a "level", the ordinal numbers preceding "level" in "first level" and "second level" do not restrict the priority between "levels". Furthermore, the number of descriptive objects is not limited by ordinal numbers and can be one or more. Taking "first device" as an example, the number of "devices" can be one or more. Furthermore, the objects modified by different prefixes can be the same or different. For example, if the descriptive object is a "device", then "first device" and "second device" can be the same device or different devices, and their types can be the same or different; similarly, if the descriptive object is "information", then "first information" and "second information" can be the same information or different information, and their content can be the same or different.

In some embodiments, "including A", "containing A", "for indicating A" and "carrying A" can be interpreted as directly carrying A or indirectly indicating A.

In some embodiments, terms such as "in response to...", "in response to determining...", "in the case of...", "when..." and "if...", etc. can be interchanged.

In some embodiments, terms such as "greater than", "greater than or equal to", "not smaller than", "more than", "more than or equal to", "not less than", "higher than", "higher than or equal to", "not lower than" and "above", etc. are interchangeable, and terms such as "smaller than," "smaller than or equal to", "not greater than", "less than", "less than or equal to", "not more than", "lower than", "lower than or equal to", "not higher than" and "below" etc. are interchangeable.

In some embodiments, the device and apparatus can be interpreted as physical or virtual, and their names are not limited to those described in the embodiments. In some cases, they can also be understood as "equipment", "device", "circuit", "network element", "node", "function", "unit", "section", "system", "network", "chip", "chip system", "entity", "subject", etc.

In some embodiments, "network" can be interpreted as devices included in the network, such as access network device, core network device, etc.

In some embodiments, "Access Network Device (AN Device)" can also be referred to as "Radio Access Network Device (RAN Device)", "Base Station (BS)", "Radio Base Station" or "Fixed Station". In some embodiments, it can also be understood as "Node," "Access Point", "Transmission Point (TP)", "Reception Point (RP)", "Transmission/Reception Point (TRP)", "Panel", "Antenna Panel", "Antenna Array", "Cell", "Macro Cell", "Small Cell", "Femto Cell", "Pico Cell", "Sector", "Cell Group", "Serving Cell", "Carrier", "Component Carrier" or "Bandwidth Part (BWP)", etc.

In some embodiments, "Terminal" or "Terminal Device" can also be referred to as "User Equipment (UE)", "User Terminal", "Mobile Station (MS)", "Mobile Terminal (MT)", "Subscriber Station", "Mobile Unit", "Subscriber Unit", "Wireless Unit", "Remote Unit", "Mobile Device", "Wireless Device", "Wireless Communication Device", "Remote Device", "Mobile Subscriber Station", "Access Terminal", "Mobile Terminal", "Wireless Terminal", "Remote Terminal", "Handset", "User Agent", "Mobile Client", "Client", etc.

In some embodiments, the acquisition of data, information, etc., may comply with the laws and regulations of the country where the user is located.

In some embodiments, data, information, etc., may be acquired after obtaining the user's consent.

Furthermore, each element, each row, or each column in the tables of the embodiments of the present disclosure can be implemented as an independent embodiment, and any combination of any element, any row, or any column can also be implemented as an independent embodiment.

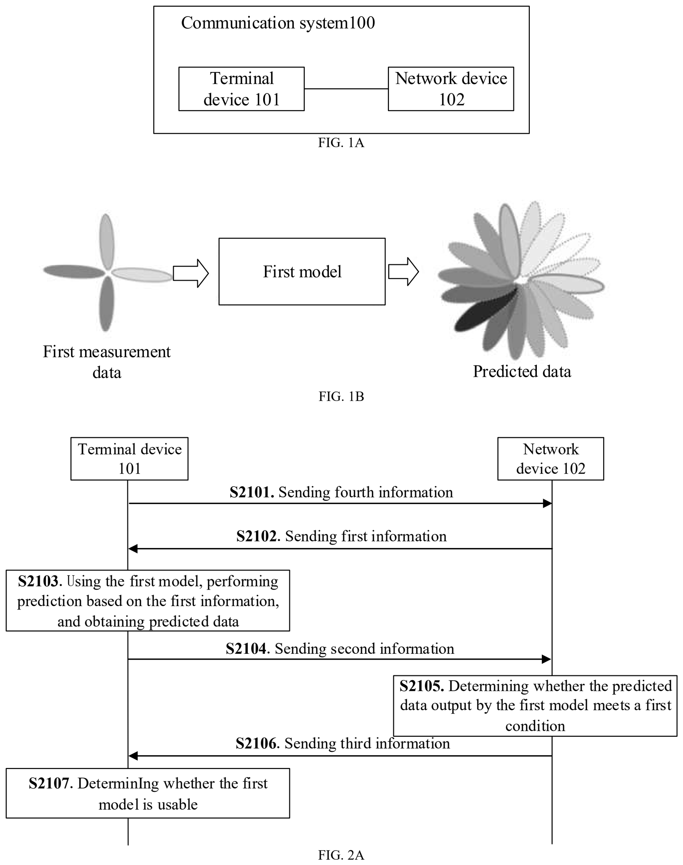

FIG. 1A is a schematic diagram of an architecture of a communication system according to an embodiment of the present disclosure. As shown in FIG. 1A, the communication system 100 may include a terminal device 101 and a network device 102.

In some embodiments, the terminal device 101 may include at least one of a mobile phone, a wearable device, an Internet of Things device, a car with communication function, a smart car, a tablet computer (pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the network device 102 may include at least one of an access network device and a core network device.

In some embodiments, the access network device may be a node or device that connects a terminal to a wireless network. The access network device may include at least one of an evolved NodeB (eNB) in a 5G communication system, a next-generation eNB (ng-eNB), a next-generation NodeB (gNB), a node B (NB), a home node B (HNB), a home evolved node B (HeNB), a wireless backhaul device, a radio network controller (RNC), a base station controller (BSC), a base transceiver station (BTS), a baseband unit (BBU), a mobile switching center, a base station in a 6G communication system, an open RAN base station, a cloud base station (Cloud RAN), a base station in other communication systems, and an access node in a Wi-Fi system, but is not limited thereto.

In some embodiments, the technical solutions of the present disclosure are applicable to an Open RAN architecture. In this case, the interfaces between or within the access network devices involved in the embodiments of the present disclosure can become internal interfaces of the Open RAN. The processes and information interactions between these internal interfaces can be implemented through software or programs.

In some embodiments, the access network device can be composed of a central unit (CU) and a distributed unit (DU). The CU can also be called a control unit. Using a CU-DU structure can separate the protocol layers of the access network device. The functions of some protocol layer are centrally controlled by the CU, while the functions of the remaining part or all protocol layers are distributed in the DU, which is centrally controlled by the CU. However, this is not a limitation.

In some embodiments, the core network device can be a single device, or multiple devices or a group of devices. The core network can include at least one of an Evolved Packet Core (EPC), a 5G Core network (5GCN), and Next Generation Core (NGC).

It is understood that the communication system described in the embodiments of the present disclosure is for the purpose of more clearly illustrating the technical solutions of the embodiments of the present disclosure and does not constitute a limitation on the embodiments of the present disclosure. Those skilled in the art will understand that, with the evolution of system architecture and the emergence of new service scenarios, the technical solutions proposed in the embodiments of the present disclosure are also applicable to similar technical problems.

The following embodiments of the present disclosure can be applied to the communication system 100 shown in FIG. 1A, or some of its components, but are not limited thereto. The components shown in FIG. 1A are examples; the communication system may include all or some of the components in FIG. 1A, or it may include other components besides those in FIG. 1A. The number and form of each component are arbitrary; each component can be physical or virtual. The connection relationship between the components is an example; the components may be unconnected or connected, and the connection can be in any manner, including direct or indirect connections, wired or wireless connections.

The embodiments of the present disclosure can be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM(Registered Trademark)), CDMA2000, Ultra Mobile Broadband (UMB), IEEE 802.11 (Wi-Fi(Registered Trademark)), IEEE 802.16 (WiMAX(Registered Trademark)), and IEEE 802.20, Ultra-Wideband (UWB), Bluetooth (Registered Trademark), a Public Land Mobile Network (PLMN) network, a Device-to-Device (D2D) system, a Machine-to-Machine (M2M) system, an Internet of Things (IoT) system, a Vehicle-to-Everything (V2X) system, a system utilizing other communication methods, and next-generation systems extended from them, etc. Furthermore, multiple systems can be combined (e.g., a combination of LTE or LTE-A with 5G, etc.) to apply.

In some embodiments of the present disclosure, the above-described communication system may incorporate a first model, which may be an AI model, an ML model, an AI/ML model, or other predictive models. The first model may be one or more models.

In this communication system, the process and performance of certain typical scenarios can be simplified and improved based on the prediction of the first model. These typical scenarios may include CSI (Channel State Information) feedback, beam management, positioning, or other application scenarios. Specifically:
In the CSI feedback scenario, the terminal device can obtain an accurate and effective CSI feedback value based on the prediction of the first model. The network device can then select a suitable MCS (Modulation and Coding Scheme) for downlink data transmission based on the feedback CSI value, reducing the BLER (Block Error Rate) of the downlink data transmission. In the beam management scenario, the terminal device can predict the optimal beam/beam group based on the first model, such as the top-1 strongest beam/beam group. The network device can then select the best beam for subsequent transmission. In the positioning scenario, the terminal device can predict positioning information based on the first model, thereby improving positioning accuracy. This positioning information may include at least one of the following: Reference Signal Time Difference (RSTD), Positioning Reference Signal-Reference Signal Receiving Power (PRS-RSRP), positioning accuracy, Line of Sight (LOS) indication, and Non-Line of Sight (NLOS) indication, etc.

FIG. 1B is a schematic diagram of a beam prediction scenario according to an embodiment of the present disclosure. As shown in FIG. 1B, the terminal device can measure a part of the beams to obtain first measurement data. This first measurement data may include the channel quality of the measured part of the beams. This first measurement data is input into the first model, and predicted data output by the first model can be obtained. For example, the first model can perform inference to predict the channel quality of other beams besides the measured part. The predicted data may include at least one of the following: channel qualities of some or all beams, an optimal beam, and a channel quality of the optimal beam.

The network device can determine the beam with the best channel quality from all beams for communication based on the aforementioned first measurement data and/or predicted data.

In some embodiments, the first model can be deployed on the terminal device. The part of the beams measured by the terminal device can be referred to as first information, and the predicted data obtained by the terminal device based on the first model can be referred to as second information. The terminal device can report the predicted data to the network device.

In some embodiments, the first model can be deployed on the network device. The part of the beams measured by the terminal device can be referred to as first information, and the first measurement data obtained by the terminal device can be referred to as second information. The terminal device can report the first measurement data to the network device, and the network device can input the first measurement data into the first model to obtain the predicted data.

In related art, if the terminal device updates or adds a first model, and the model is not in a model management monitoring list, the performance and reliability of the model's prediction results have not been tested, and the terminal device may not be able to directly use the model for result prediction. Therefore, online verification and test of the model is a problem that urgently needs to be solved.

FIG. 2A is a schematic flowchart of a model test method according to an embodiment of the present disclosure. This method can be executed by the aforementioned communication system. As shown in FIG. 2A, the method may include:
Step S2101, the terminal device sends fourth information to the network device.

In some embodiments, the network device may receive the fourth information. For example, the network device may receive the fourth information sent by the terminal device. As another example, the network device may also receive fourth information sent by other entities.

In some embodiments, the fourth information can be configured to trigger the network device to send the first information.

In some embodiments, the fourth information can be configured to request or instruct the network device to send the first information.

In some embodiments, the fourth information can be configured to indicate the addition or update of the first model.

In some embodiments, the fourth information can be configured to indicate the test of the first model.

In some embodiments, the name of the fourth information is not limited, and may be, for example, "indication information for model addition or update", "indication information for model addition", "indication information for model update", "indication information for model online test", "indication information for model test", "request Information for model test", etc.

In some embodiments, the terminal device can send the fourth information to the network device when adding or updating the first model, so as to trigger the network device to start to test the first model.

In some embodiments, the fourth information may include a first model identifier, which may be an ID identifier corresponding to the first model.

In some embodiments, the fourth information may include at least one of the following: indication information for model update, indication information for model addition, and indication information for model test.

The indication information for model update can be configured to trigger, request, or instruct the update (or rollback) of the first model.

The indication information for model addition can be configured to trigger, request, or instruct the addition of the first model.

The indication information for model test can be configured to trigger, request, or instruct the test (training or validation) of the first model. The name of this indication information for model test is not limited; for example, it could be "indication information for model online test", "request information for model test", etc.

In some embodiments, the terminal device can send a fourth message, which may include the aforementioned fourth information. For example, the terminal device may send the fourth message to a network device. Alternatively, the network device may receive the fourth message. The fourth message may include at least one of the following: a Radio Resource Control (RRC) message, a Medium Access Control Control Element (MAC CE), Uplink Control Information (UCI), or other messages sent by the terminal device to the network device.

In some embodiments of the present disclosure, the aforementioned first model may be an AI model, an ML model, an AI/ML model, or other models used for prediction. The first model may be one or more models.

In some embodiments, the first model may be a model for performing beam prediction, and the first model can be applied in beam management scenarios. For example, the first model can be deployed on a terminal device. The terminal device can predict the optimal beam/beam group (e.g., the top-1 strongest beam/beam group) based on the first model and report it to the network device. The network device can then select the optimal beam/beam group for subsequent transmission. Similarly, the first model can also be deployed on a network device, which can also predict the optimal beam/beam group based on the first model.

In some embodiments, the first model can be a model for performing CSI feedback prediction. The first model can be applied in CSI feedback scenarios. For example, the first model can be deployed on a terminal device. The terminal device can predict an accurate and effective CSI feedback value based on the first model. The network device can select a suitable MCS for downlink data transmission based on the CSI feedback value, reducing the BLER of downlink data transmission. Similarly, the first model can also be deployed on a network device, which can also predict an accurate and effective CSI feedback value based on the first model.

In some embodiments, the first model can be a model for performing positioning prediction. The first model can be applied in positioning scenarios. For example, the first model can be deployed on a terminal device. The terminal device can predict positioning information based on the first model to improve positioning accuracy. The positioning information may include at least one of RSTD, PRS-RSRP, positioning accuracy, LOS indication, NLOS indication, etc. Similarly, the first model can also be deployed on a network device, and the network device can also predict the aforementioned positioning information based on the first model.

Step S2102: The network device sends first information to the terminal device.

In some embodiments, the terminal device can receive the first information. For example, the terminal device can receive the first information sent by the network device. Or, for example, the terminal device can receive the first information sent by other entities.

In some embodiments, the first information may include information for testing the first model.

In some embodiments, the first information may include first data for testing the first model. The first data may include downlink data, and the downlink data may be data sent by the network device to the terminal device via a downlink channel. The downlink channel may include at least one of the Physical Downlink Control Channel (PDCCH), Physical Downlink Shared Channel (PDSCH), or other channels specified by the protocol.

In some embodiments, the first information may include a first signal for testing the first model. The first signal may include at least one of a Channel State Information-Reference Signal (CSI-RS), a Synchronization Signal Block (SSB), a Positioning Reference Signal (PRS), or other signals transmitted by the network device to the terminal device.

In some embodiments, the first information may include the first data and the first signal described above.

In some embodiments, the name of the first information is not limited, and may be, for example, "test reference information", "test information", "test data", "test signal", "model test information", "model test data", "model test signal", etc. Similarly, the name of the first signal is not limited, and may be, for example, "test reference signal", "test signal", "model test signal", etc.; the name of the first data is also not limited, and may be, for example, "test reference data", "test data", "model test data", etc.

In some embodiments, the test performed on the first model may be an online test. For example, the first model may be tested online while a commercial network is in operation. The first data may include data from the commercial network, and similarly, the first signal may include signals from the commercial network. This allows for online test after the terminal or network device is commercially available, enabling timely verification, updates, or additions to the model.

In some embodiments, the test of the first model described above can also be an offline test; for example, the first model can be tested offline in a laboratory or before commercial network deployment.

In some embodiments, the network device can send a first message, and the first message may include the aforementioned first information. For example, the network device may send the first message to the terminal device. Alternatively, the terminal device may receive the first message. The first message may include at least one of the following: an RRC message, a MAC CE, Downlink Control Information (DCI), or other messages sent by the network device to the terminal device.

In some embodiments of the present disclosure, the network device may determine that the first model meets a test initiation condition based on the fourth information and send the first information to the terminal device.

The test initiation condition may include at least one of:
the first model has not been tested: for example, the first model has not been trained or performance verified;
the first model is not in a model management set, where the model management set includes models that have been tested (or trained, or performance verified). This model management set can also be called a model management list, a model monitoring management list, a model monitoring list, etc.

The fourth information is configured to instruct to perform test of the first model. For example, the first information may be indication information for model test or indication information for model online test.

In some embodiments, the network device can determine whether it needs to send the first information to the terminal device, or determine whether to send data/signals for online test of the first model to the terminal device, based on the received fourth information.

For example, if the first model is not in the model monitoring management list (has not been trained or performance verified), or after the network receives the online test indication information, the network sends an online test data/signal to the UE. The data/signal can be determined according to different scenarios. For example, data (PDSCH) is used for AI/ML-based CSI feedback; a signal (CSI-RS/SSB) is used for AL/ML-based beam management; and a signal (PRS) is used for AL/ML-based positioning.

Step S2103: The terminal device uses the first model, performs prediction based on the first information, and obtains predicted data.

In some embodiments, the terminal device can measure the received first information and obtain first measurement data; and input the first measurement data into a first model and obtains predicted data output by the first model.

For example, the first information is a CSI-RS signal, the first measurement data can be the actual measurement result of the CSI-RS signal, and the predicted data can be the data output by the first model after the first measurement data is input to the first model.

In one implementation, the first model is deployed on the terminal device side, and the second information may include predicted data, or the second information may include both predicted data and first measurement data. The predicted data can be data predicted by the terminal device based on the first model and the first measurement data.

For example, the terminal device can receive first information, measure the first information and obtain first measurement data, input the first measurement data into the first model, and obtain predicted data output by the first model.

For example, the terminal device can perform prediction based on configuration information. For example, the terminal device can perform prediction using the first model based on configuration information and obtain a prediction result. The configuration information may be predefined information in the protocol, or it may be information configured by the terminal device, or it may be information received by the terminal device from the network device, such as configuration information determined and sent by the network device to the terminal device.

Step S2104: The terminal device sends second information to the network device.

In some embodiments, the network device may receive the second information. For example, the network device may receive the second information sent by the terminal device. For another example, the network device may receive second information sent by other entities.

In some embodiments, the name of the second information is not limited, and may include, for example, "prediction result", "prediction information", "measurement result", "measurement information", "test result", "test information", etc.

In some embodiments, the second information may include at least one of predicted data and first measurement data.

In some embodiments, the name of the predicted data is not limited, and may include, for example, "prediction result", "model output data", "model output result", etc. Similarly, the name of the first measurement data is not limited, and may include, for example, "first measurement result", "actual measurement result", "actual measurement data", etc.

The predicted data may be data predicted by the first model based on the first measurement data, and the first measurement data may be data obtained by the terminal device after the terminal device measures the first information.

In some embodiments, the terminal device may send a second message, and the second message may include the aforementioned second information. For example, the terminal device may send the second message to the network device. Alternatively, the network device may receive the second message. The second message may include at least one of an RRC message, a MAC CE, UCI, or other messages sent by the terminal device to the network device.

In some embodiments of the present disclosure, the terminal device uses the first model to predict the result based on the configuration information of the first information configured by the network device, obtains the second information (prediction result), and reports the second information to the network device.

Step S2105: The network device determines whether the predicted data output by the first model meets a first condition.

In some embodiments, the network device may determine whether the predicted data output by the first model meets the first condition based on the second information. Alternatively, the network device may determine whether the first model meets the first condition based on the second information.

In some embodiments, the first condition may be a performance requirement for the predicted data. The performance requirement may include at least one of an accuracy requirement, a precision requirement, and a reliability requirement.

In some embodiments, the first condition may be a condition for determining whether the first mode can be used. For example, if the first condition is met, the first model can be used by the terminal device or the network; if the first condition is not met, the first model cannot be used by the terminal device or the network.

In some embodiments, the first model may be a model for performing beam prediction, the predicted data includes the quality of the predicted signal of a first beam, and the first beam is at least one beam configured by the network device for the terminal device.

It should be noted that the first beam can be a beam or a beam group, and the present disclosure does not limit this.

The first beam can be any one or more beams configured by the network device for the terminal device, and the first beam can also be the beam with the best signal quality.

The first condition may include a difference between the predicted signal quality and a first signal quality is within a first difference range; where the predicted signal quality is a signal quality of the first beam predicted by the first model based on the first information; the first signal quality is a signal quality of the first beam generated by the network device based on the beam configuration information; or, the first signal quality is a signal quality of the first beam actually measured by the terminal device.

In some embodiments, the first model may be a model for performing beam prediction, and the predicted data may include a second beam that meets a signal condition obtained from the beam prediction;
where the signal condition may include at least one of:
a signal quality of the second beam is greater than or equal to a preset signal quality threshold;
the second beam is a beam with the best signal quality among multiple beams configured by the network device for the terminal device.

Similarly, it should be noted that the second beam may be a beam or a beam group.

The first condition may be that the number of times the prediction success condition is met in N beam predictions is greater than or equal to M; where N is a natural number, and M is a natural number less than or equal to N; the prediction success condition is that a second beam is the same as a third beam, and the second beam is a beam obtained from the beam prediction;
the third beam is a beam that meets the signal condition determined by the network device according to beam configuration information; or,
the third beam is a beam that meets the signal condition determined according to second measurement data, and the second measurement data is data obtained by the terminal device after the terminal device measures multiple beams configured by the network device for the terminal device.

For example, the network device configures first information (which may be a first signal) for beam management to the terminal device. The terminal device can infer and predict the predicted signal quality of the first beam based on the first information using the first model. The first beam may be at least one beam or beam group configured by the network device for the terminal device, or it may be the optimal beam or beam group with the best signal quality. The terminal device can report predicted data to the network device. The predicted data may include the predicted signal quality of the first beam. Alternatively, the second information includes the first beam and its predicted signal quality. The network device can evaluate whether the performance requirement of the predicted data reported by the terminal device meet a first condition. The first condition may include a predefined performance index requirement.

In one implementation, the performance index requirement may be a signal quality precision requirement. The signal quality may include at least one of RSRP, SINR, RSSI, and RSRQ. The signal quality precision may be a difference between the predicted signal quality and the first signal quality.

The first signal quality can be a signal quality simulated by the network device based on beam configuration information, or it can be the signal quality of the first beam actually measured by the terminal device (e.g., the signal quality of the first beam obtained by the terminal device measuring the first information using traditional methods).

If the signal quality precision meets a predefined performance index requirement, for example, if the signal quality precision is within a first difference range, then the predicted data output by the first model can be determined to meet the first condition.

In another implementation, the performance index requirement can be a prediction reliability requirement. For example, the prediction reliability percentage needs to meet a predefined prediction reliability requirement. If the performance index is prediction reliability, then the prediction reliability percentage needs to meet the predefined prediction reliability requirement. For example, if N beam predictions are performed, and the prediction success condition is met M times, then the prediction reliability is (M/N)*100%.

N is a natural number, and M is a natural number less than or equal to N.

The prediction success condition is that a second beam and a third beam are the same.

The second beam is a beam (e.g., an optimal beam or beam group) that meets the signal condition, obtained by the terminal device through beam prediction.

The third beam can be a beam that meets the signal condition, determined by the network device based on beam configuration information. For example, the third beam can be a beam (e.g., an optimal beam or beam group) that meets the signal condition, simulated and generated by the network device. Alternatively,

the third beam can be a beam that meets the signal condition, determined based on second measurement data, and the second measurement data is data obtained by the terminal device after the terminal device measures multiple beams configured by the network device for the terminal device.

If the prediction reliability requirement meets a predefined performance index requirement, for example, if the number of successful predictions that meet the prediction success condition in N beam predictions is greater than or equal to M, then the predicted data output by the first model can be determined to meet the first condition.

It should be noted that the predicted data output by the first model meeting the first condition can also be expressed as "the first model is reliable".

Step S2106: The network device sends third information to the terminal device.

In some embodiments, the terminal device can receive the third information. For example, the terminal device can receive the third information sent by the network device. For another example, the terminal device may also receive third information sent by other entities.

In some embodiments, the third information may be configured to indicate whether the first model can be used by the terminal device.

In some embodiments, the third information may be configured to indicate whether the terminal device can use the first model.

For example, the network device may send the third information if it determines that the prediction result of the first model meets the first condition; the third information is configured to indicate that the first model can be used by the terminal device.

For another example, the network device may not send the third information if it determines that the prediction result of the first model does not meet the first condition.

For yet another example, the network device may send the third information as a first specific value if it determines that the prediction result of the first model meets the first condition; the third information as a first specific value can be configured to indicate that the first model can be used by the terminal device.

For yet another example, the network device may send the third information as a second specific value if it determines that the prediction result of the first model does not meet the first condition; the third information as a second specific value can be configured to indicate that the first model cannot be used by the terminal device. The first specific value and the second specific value are different; for example, the first specific value is 1 and the second specific value is 0; or, the first specific value is 0 and the second specific value is 1.

In some embodiments, the third information can be configured to instruct the terminal device to add, update, or delete the first model.

In some embodiments, the third information can be configured to instruct the terminal device to add or update the first model.

In some embodiments, the third information can be configured to indicate that the terminal device can use the first model.

In some embodiments, the third information can be configured to indicate the terminal device is allowed to use the first model.

In some embodiments, the third information can be configured to instruct the terminal device to delete the first model.

In some embodiments, the third information can be used to indicate that the terminal device cannot use the first model.

In some embodiments, the name of the third information is not limited, and may be, for example, "indication information for model addition", "indication information for model update", "indication information for model deletion", "indication information for being able to use model", "indication information for allowing to use model", etc.

In some embodiments, the network device determines that the predicted data output by the first model meets the first condition and sends third information to the terminal device. The third information is configured to instruct the terminal device to add or update the first model.

For example, the network evaluates whether the predicted data output by the first model meets the first condition (i.e., the predefined performance requirement) based on the second information reported by the terminal device. If it does, the network device can send third information to the terminal device. The third information can be configured to instruct the terminal device to add or update the first model.

Alternatively, after receiving the third information, the terminal device can add or update the first model.

In other embodiments, the network device determines that the predicted data output by the first model does not meet the first condition and sends third information to the terminal device. The third information is configured to instruct the terminal device to delete the first model.

Alternatively, after receiving the third information, the terminal device can delete the first model.

In some embodiments, the network device can send a third message, and the third message may include the aforementioned third information. For example, the network device may send a third message to the terminal device. Alternatively, the terminal device can receive the third message. The third message may include at least one of an RRC message, a MAC CE, DCI, or other messages sent by the network device to the terminal device.

Step S2107: The terminal device determines whether the first model is usable.

In some embodiments, the terminal device can determine whether the first model is usable based on the third information.

For example, the terminal device can determine that the first model is usable upon receiving the third information. Similarly, the network device can send the third information if it determines that the prediction result of the first model meets the first condition.

For another example, the terminal device can determine that the first model is unusable if it does not receive the third information. Similarly, the network device can not send the third information if it determines that the prediction result of the first model does not meet the first condition.

For yet another example, the terminal device can determine that the first model is usable if the value of the third information is a first specific value. Similarly, the network device can send the third information which is a first specific value if it determines that the prediction result of the first model meets the first condition.

For yet another example, the terminal device can determine that the first model is unusable if the value of the third information is a second specific value. Similarly, the network device can send the third information which is a second specific value if it determines that the prediction result of the first model does not meet the first condition. The first specific value and the second specific value are different; for example, the first specific value is 1 and the second specific value is 0; or, the first specific value is 0 and the second specific value is 1.

In some embodiments, the terminal device determines that the first model is usable and can be formally used for prediction, improving the performance and reliability of the prediction.

In some embodiments, the terminal device can add, update, or delete the first model based on the third information.

In some embodiments, the third information is configured to instruct the terminal device to add the first model, and the terminal device can add the first model.

In some embodiments, the third information is configured to instruct the terminal device to update the first model, and the terminal device can update the first model.

In some embodiments, the third information is configured to instruct the terminal device to delete the first model, and the terminal device can delete the first model.

Using the above method, the first model can be tested or verified to determine whether the first model meets the first condition, thereby determining the performance and reliability of the model. Online verification and test of the model can be achieved, improving the flexibility and reliability of model management.

The method involved in the embodiments of the present disclosure may include at least one of the steps S2101 to S2107 described above. For example, step S2105 can be implemented as an independent embodiment, step S2104 can be implemented as an independent embodiment, steps S2102+S2105 can be implemented as an independent embodiment, steps S2102+S2104 can be implemented as an independent embodiment, steps S2105+S2106 can be implemented as an independent embodiment, steps S2106+S2107 can be implemented as an independent embodiment, steps S2102+S2104+S2105 can be implemented as an independent embodiment, steps S2102+S2104+S2105+S2106 can be implemented as an independent embodiment, and steps S2101+S2102+S2104+S2105 can be implemented as an independent embodiment, but are not limited thereto.

In some embodiments, the order of steps S2101 to S2107 can be interchanged or they can be executed simultaneously. For example, steps S2101 and S2104 can be interchanged or they can be executed simultaneously.

In some embodiments, steps S2101 to S2107 are all optional. For example, steps S2101, S2102, S2104, S2106, and S2107 are optional, and one or more of these steps may be omitted or substituted in different embodiments. As another example, steps S2101, S2105, S2106, and S2107 are optional, and one or more of these steps may be omitted or substituted in different embodiments.

In some embodiments, other optional implementations described before or after the description corresponding to FIG. 2A may be referred to.

In some embodiments, the names of information, etc., are not limited to those described in the embodiments. Terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", and "chip" are interchangeable.

In some embodiments, "acquire", "get", "obtain", "receive", "transmit", "bidirectional transmission" and "send and/or receive" are interchangeable and can be interpreted as a plurality of meanings such as receiving from other entities, acquiring from protocols, acquiring from higher layers, obtaining through self-processing, or autonomous implementation, etc.

In some embodiments, terms such as "send", "transmit", "report", "distribute", "transfer", "bidirectional transmission" and "send and/or receive" are interchangeable.

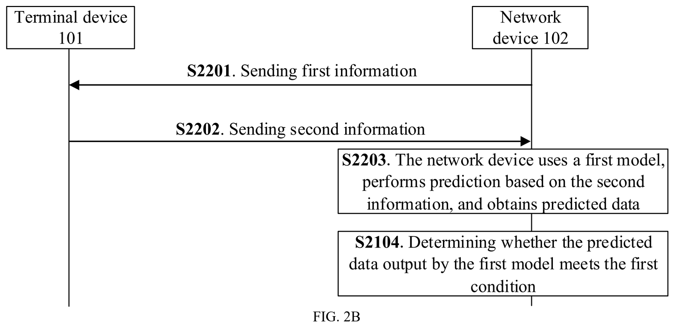

FIG. 2B is a flowchart illustrating a model test method according to an embodiment of the present disclosure. The method can be performed by the aforementioned communication system. As shown in FIG. 2B, the method may include:

Step S2201: The network device sends first information to the terminal device.

Optional implementations of step S2201 can be found in the optional implementations of step S2102 in FIG. 2A and other related parts in the embodiments involved in FIG. 2A, and will not be repeated here.

In some embodiments, the terminal device may receive the first information. For example, the terminal device may receive the first information sent by the network device. For another example, the terminal device may receive the first information sent by other entities.

In some embodiments, the network device may send the first information to the terminal device when adding or updating the first model, in order to initiate test of the first model.

Step S2202: The terminal device sends second information to the network device.

Optional implementations of step S2202 can be found in the optional implementations of step S2104 in FIG. 2A and other related parts in the embodiments involved in FIG. 2A, and will not be repeated here.

In some embodiments, the network device may receive the second information. For example, the network device can receive the second information sent by the terminal device. For another example, the network device can also receive second information sent by other entities.

In some embodiments, the second information may include first measurement data. The terminal device can measure the received first information to obtain the first measurement data.

Step S2203: The network device uses a first model, performs prediction based on the second information, and obtains predicted data.

In one implementation, the first model can be deployed on the network device side, and the second information may include the aforementioned first measurement data.

Alternatively, the network device can obtain the predicted data by performing prediction based on the first model and the first measurement data. For example, after receiving the first measurement data, the network device can input the first measurement data into the first model and obtain the predicted data output by the first model.

For example, the network device can perform prediction based on configuration information. For example, the network device can use the first model to perform prediction based on configuration information to obtain a prediction result. The configuration information may be protocol-predefined information, or it may be information configured by the network device, or it may be information received by the network device from the terminal device, such as configuration information determined and sent by the terminal device to the network device.

In another implementation, the first model can be deployed on both the terminal device and the network device. The second information may include predicted data, or it may include first measurement data, or it may include both predicted data and first measurement data. If the network device receives the first measurement data, it can obtain the predicted data by performing prediction based on the first model and the first measurement data. If the network device receives the predicted data, it can directly use the predicted data without re-performing the prediction. The communication system may contain a first terminal with the first model deployed and a second terminal without the first model deployed; the network device can be compatible with both types of terminal devices.

Step S2204: The network device determines whether the predicted data output by the first model meets the first condition.

Optional implementations of step S2204 can be found in the optional implementation of step S2105 in FIG. 2A and other related parts in the embodiments involved in FIG. 2A, which will not be repeated here.

In some embodiments, in a case that the network device determines that the predicted data output by the first model meets the first condition, it can use the first model for prediction, improving the performance and reliability of the prediction.

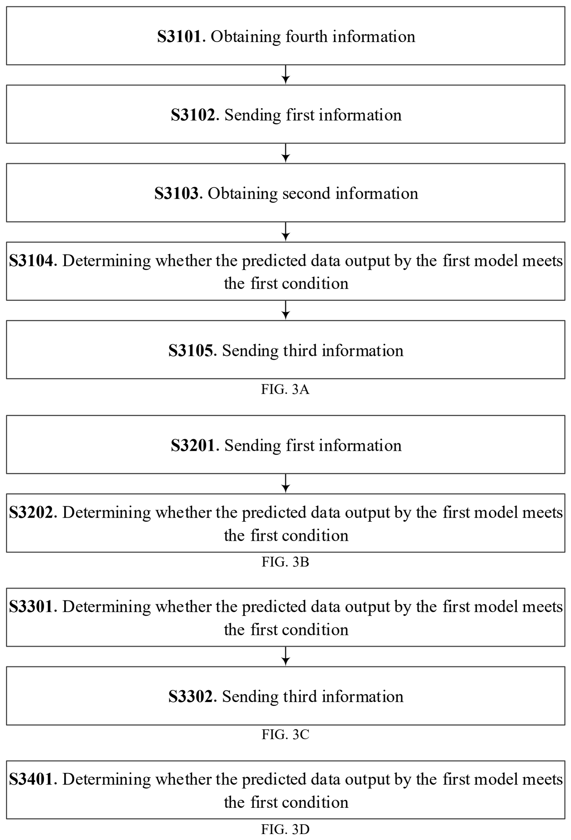

FIG. 3A is a schematic flowchart of a model test method according to an embodiment of the present disclosure. As shown in FIG. 3A, an embodiment of the present disclosure relates to a model test method, which can be performed by a network device. The method includes:
Step S3101: Obtaining fourth information.

Optional implementations of step S3101 can be found in the optional implementations of step S2101 in FIG. 2A and other related parts in the embodiments shown in FIG. 2A, and will not be repeated here.

In some embodiments, the network device can receive fourth information sent by a terminal device, but is not limited thereto; the network device can also receive fourth information sent by other entities.

In some embodiments, the network device can obtain fourth information defined by a protocol.

In some embodiments, the network device can obtain fourth information from higher layer(s).

In some embodiments, the network device can process to obtain the fourth information.

In some embodiments, step S3101 can be omitted, and the network device can autonomously implement the function indicated by the fourth information, or the function can be defaulted or set to default.

Step S3102: Sending first information.

Optional implementations of step S3102 can be found in the optional implementations of step S2102 in FIG. 2A, the optional implementations of step S2201 in FIG. 2B, and other related parts in the embodiments involved in FIG. 2A and FIG. 2B, which will not be repeated here.

In some embodiments, the network device can send the first information to the terminal device, but is not limited thereto; the network device can also send the first information to other entities.

Alternatively, the first information can be used by the terminal device to perform measurement to obtain first measurement data. For example, the terminal device can receive the first information and measure the first information to obtain first measurement data. Optional implementations of this can be found in the optional implementations of steps S2102 or S2104 in FIG. 2A, and other related parts in the embodiments involved in FIG. 2A, which will not be repeated here.

Step S3103: Obtaining second information.

Optional implementations of step S3103 can be found in the optional implementations of step S2104 in FIG. 2A, the optional implementations of step S2202 in FIG. 2B, and other related parts in the embodiments involved in FIG. 2A and FIG. 2B, which will not be repeated here.

In some embodiments, the network device can receive second information sent by the terminal device, but is not limited thereto; the network device can also receive second information sent by other entities.

In some embodiments, the network device can obtain second information as defined by a protocol.

In some embodiments, the network device can obtain second information from upper layer(s).

In some embodiments, the network device can process to obtain the second information.

In some embodiments, step S3103 can be omitted, and the network device can autonomously implement the function indicated by the second information, or the above function can be defaulted or set to default.

Step S3104: Determining whether the predicted data output by the first model meets the first condition.

Optional implementations of step S3104 can be found in the optional implementations of step S2105 in FIG. 2A, the optional implementations of step S2204 in FIG. 2B, and other related parts in the embodiments involved in FIG. 2A and FIG. 2B, which will not be repeated here.

Step S3105: Sending third information.

Optional implementations of step S3105 can be found in the optional implementations of step S2106 in FIG. 2A, and other related parts in the embodiments involved in FIG. 2A, which will not be repeated here.

In some embodiments, the network device can send the third information to the terminal device, but is not limited thereto; the network device can also send the third information to other entities.

Alternatively, the third information can be used by the terminal device to perform measurement to obtain first measurement data. For example, the terminal device can receive the third information and perform measurement on the third information to obtain first measurement data. Optional implementations of this can be found in the optional implementations of steps S2102 or S2104 in FIG. 2A, and other related parts in the embodiments involved in FIG. 2A, which will not be repeated here.

Alternatively, the third information can be used by the terminal device to determine whether the first model is usable. Optional implementations can be found in the optional implementations of step S2107 in FIG. 2A and other related parts of the embodiments involved in FIG. 2A, which will not be repeated here.

In some embodiments, the network device can use the first model, performs prediction based on the second information and obtains predicted data. Specific implementations of this step can be found in the optional implementations of step S2203 in FIG. 2B and other related parts of the embodiments involved in FIG. 2B, which will not be repeated here.

The methods involved in the embodiments of the present disclosure may include at least one of the steps S3101 to S3105 described above. For example, step S3104 can be implemented as an independent embodiment, as can steps S3102+S3104, S3104+S3105, S3102+S3103+S3104, and S3102+S3103+S3104+S3105, but the implementation is not limited thereto.

In some embodiments, the order of steps S3101 to S3105 can be interchanged or they can be executed simultaneously. For example, steps S3101 and S3103 can be interchanged or executed simultaneously.

In some embodiments, steps S3101 to S3105 are all optional steps. For example, steps S3101, S3102, S3103, and S3105 are optional, and one or more of these steps can be omitted or substituted in different embodiments.

In some embodiments, other optional implementations described before or after the description corresponding to FIG. 3 can be referred to.

FIG. 3B is a schematic flowchart illustrating a model test method according to an embodiment of the present disclosure. As shown in FIG. 3B, the embodiment of the present disclosure relates to a model test method, which can be performed by a network device. The method may include:
Step S3201: Sending first information.

Optional implementations of step S3201 can be found in step S2102 of FIG. 2A, optional implementations of step S3102 of FIG. 3A, and other related parts in the embodiments of FIG. 2A and FIG. 3A, and will not be repeated here.

Step S3202: Determining whether the predicted data output by the first model meets a first condition.

Optional implementations of step S3202 can be found in step S2105 of FIG. 2A, optional implementations of step S2204 of FIG. 2B, optional implementations of step S3104 of FIG. 3A, and other related parts in the embodiments of FIG. 2A, FIG. 2B, and FIG. 3A, and will not be repeated here.

In some embodiments, the above steps are all optional steps.

In some embodiments, the embodiment shown in FIG. 3B can be combined with step S3103 in the embodiment shown in FIG. 3A to form a new embodiment.

In some embodiments, the embodiment shown in FIG. 3B can be combined with step S3101 in the embodiment shown in FIG. 3A to form a new embodiment.

In some embodiments, the embodiment shown in FIG. 3B can be combined with steps S3103 and S3105 in the embodiment shown in FIG. 3A to form a new embodiment.

In some embodiments, the embodiment shown in FIG. 3B can be combined with steps S3101 and S3103 in the embodiment shown in FIG. 3A to form a new embodiment.

In some embodiments, the embodiment shown in FIG. 3B can be combined with steps S3101, S3103, and S3105 in the embodiment shown in FIG. 3A to form a new embodiment.

FIG. 3C is a schematic flowchart of a model test method according to an embodiment of the present disclosure. As shown in FIG. 3C, the embodiment of the present disclosure relates to a model test method, which can be performed by a network device. The method may include:

Step S3301: Determining whether the predicted data output by a first model satisfies a first condition.

Optional implementations of step S3301 can be found in the optional implementations of step S2105 in FIG. 2A, step S2204 in FIG. 2B, and step S3104 in FIG. 3A, as well as other related parts in the embodiments involved in FIG. 2A, FIG. 2B, and FIG. 3A, and will not be repeated here.

Step S3302: Sending third information.

Optional implementations of step S3302 can be found in the optional implementations of step S2106 in FIG. 2A, step S3105 in FIG. 3A, as well as other related parts in the embodiments involved in FIG. 2A and

FIG. 3A, and will not be repeated here.

In some embodiments, the above steps are all optional.

In some embodiments, the embodiment shown in FIG. 3C can also be combined with step S3103 in the embodiment shown in FIG. 3A as a new embodiment.

In some embodiments, the embodiment shown in FIG. 3C can also be combined with steps S3102 and S3103 in the embodiment shown in FIG. 3A as a new embodiment.

In some embodiments, the embodiment shown in FIG. 3C can be combined with steps S3102, S3103, and S3103 in the embodiment shown in FIG. 3A to form a new embodiment.

FIG. 3D is a schematic flowchart of a model test method according to an embodiment of the present disclosure. As shown in FIG. 3C, the embodiment of the present disclosure relates to a model test method, which can be performed by a network device. The method may include:
Step S3401: Determining whether the predicted data output by the first model meets a first condition.

Optional implementations of step S3401 can be found in optional implementations of step S2105 in FIG. 2A, step S2204 in FIG. 2B, step S3104 in FIG. 3A, and other related parts in the embodiments involved in FIG. 2A, FIG. 2B, and FIG. 3A, which will not be repeated here.

In some embodiments, the embodiment shown in FIG. 3C can be combined with at least one of steps S3101, S3102, S3103, and S3105 in the embodiment shown in FIG. 3A to form a new embodiment.

In some embodiments, the first condition is the performance requirement of the predicted data, the predicted data is data predicted by the first model based on the first measurement data, the first measurement data is data obtained by the terminal device after the terminal device measures the first information, and the first information is information sent by the network device to the terminal device.

In some embodiments, the method further includes:
receiving second information sent by the terminal device, the second information including the predicted data.

In some embodiments, the method further includes:
sending third information to the terminal device; the third information indicating whether the first model can be used by the terminal device.

In some embodiments, the method further includes:
receiving fourth information; the fourth information triggering the network device to send first information, the fourth information including a first model identifier of the first model;
determining that the first model meets the test initiation condition based on the fourth information, and sending the first information to the terminal device.

In some embodiments, the test initiation condition includes at least one of:
the first model has not been tested;
the first model is not in a model management set; the model management set includes models that have been tested;
the fourth information instructing to perform a test for the first model.

In some embodiments, the fourth information includes at least one of:
indication information for model update;
indication information for model addition;
indication information for model test.

In some embodiments, the first model is a model for performing beam prediction, and the predicted data includes the predicted signal quality of a first beam. The first beam is at least one beam configured by the network device for the terminal device.

The first condition includes a difference between the predicted signal quality and the first signal quality is within a first difference range; where the first signal quality is a signal quality of the first beam generated by the network device based on beam configuration information, or the first signal quality is a signal quality of the first beam actually measured by the terminal device.

In some embodiments, the first model is a model for performing beam prediction, and the predicted data includes a second beam obtained from the beam prediction that meets the signal condition.

The signal condition includes at least one of:
a signal quality of the second beam is greater than or equal to a preset signal quality threshold;
the second beam is a beam with the best signal quality among a plurality of beams configured by the network device for the terminal device.

In some embodiments, the first condition is that the number of times a prediction success condition is met in N beam predictions is greater than or equal to M; where N is a natural number and M is a natural number less than or equal to N; the prediction success condition is that a second beam and a third beam are the same, and the second beam is a beam that meets the signal condition and is obtained from the beam prediction;
the third beam is a beam that meets the signal condition and is determined by the network device according to beam configuration information; or, the third beam is a beam that meets the signal condition and is determined according to second measurement data, where the second measurement data is data obtained by the terminal device after the terminal device measures multiple beams configured by the network device for the terminal device.

In some embodiments, the signal quality includes at least one of: RSRP, SINR, RSSI and RSRQ.

In some embodiments, the first information includes at least one of:
first data for testing a first model;
a first signal for testing a first model.

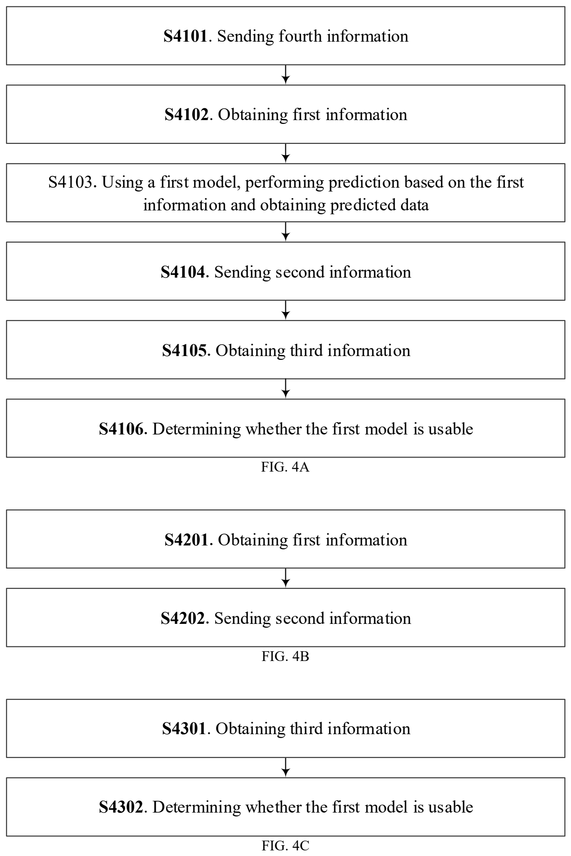

FIG. 4A is a schematic flowchart of a model test method according to an embodiment of the present disclosure. As shown in FIG. 4A, the embodiment of the present disclosure relates to a model test method that can be performed by a terminal device. The method may include:
Step S4101: Sending fourth information.

Optional implementations of step S4101 can be found in the optional implementations of step S2101 in FIG. 2A and other related parts in the embodiments involved in FIG. 2A, and will not be repeated here.

In some embodiments, the terminal device may send the fourth information to a network device, but is not limited thereto; the terminal device may also send the fourth information to other entities.

Step S4102: Obtaining first information.

Optional implementations of step S4102 can be found in the optional implementations of step S2102 in FIG. 2A and other related parts in the embodiments involved in FIG. 2A, and will not be repeated here.

In some embodiments, the terminal device may receive first information sent by a network device, but is not limited thereto; the terminal device may also receive first information sent by other entities.

In some embodiments, the terminal device may obtain the first information as defined by a protocol.

In some embodiments, the terminal device may obtain the first information from higher layer(s).

In some embodiments, the terminal device may process to obtain the first information.

In some embodiments, step S4102 may be omitted, and the terminal device may autonomously implement the function indicated by the first information, or the above function may be a default or default setting.

Step S4103: Using a first model, performing prediction based on the first information and obtaining predicted data.

Optional implementations of step S4103 can be found in the optional implementations of step S2103 in FIG. 2A and other related parts in the embodiments involved in FIG. 2A, and will not be repeated here.

Step S4104: Sending second information.

Optional implementations of step S4104 can be found in the optional implementations of step S2104 in FIG. 2A and other related parts in the embodiments involved in FIG. 2A, and will not be repeated here.

In some embodiments, the terminal device may send the second information to the network device, but is not limited thereto; the terminal device may also send the second information to other entities.

Step S4105: Obtaining third information.

Optional implementations of step S4105 can be found in the optional implementations of step S2106 in FIG. 2A and other related parts in the embodiments involved in FIG. 2A, which will not be repeated here.

In some embodiments, the terminal device may receive the third information sent by the network device, but is not limited thereto; the terminal device may also receive the third information sent by other entities.

In some embodiments, the terminal device may obtain the third information specified by the protocol.

In some embodiments, the terminal device may obtain the third information from higher layer(s).

In some embodiments, the terminal device may process to obtain the third information.

In some embodiments, step S4102 may be omitted; the terminal device may independently implement the function indicated by the third information, or the above function may be default or set to default.

Step S4106: Determining whether the first model is usable.

Optional implementations of step S4106 can be found in the optional implementations of step S2107 in FIG. 2A, and other related parts in the embodiments involved in FIG. 2A, which will not be repeated here.

The method involved in the embodiments of the present disclosure may include at least one of the above steps S4101 to S4106. For example, step S4104 can be implemented as an independent embodiment, steps S4103+S4104 can be implemented as an independent embodiment, steps S4102+S4104 can be implemented as an independent embodiment, steps S4105+S4106 can be implemented as an independent embodiment, steps S4102+S4103+S4104 can be implemented as an independent embodiment, steps S4101+S4102+S4104 can be implemented as an independent embodiment, and steps S4101+S4105+S4106 can be implemented as an independent embodiment, but are not limited thereto.

In some embodiments, steps S4101 to S4106 can be performed in interchangeable order or simultaneously. For example, steps S4101 and S4104 can be performed in interchangeable order or simultaneously.

In some embodiments, steps S4101 to S4106 are optional steps. For example, steps S4101, S4102, S4103, S4105, and S4106 are optional, and one or more of these steps can be omitted or substituted in different embodiments. For another example, steps S4101, S4102, and S4104 are optional, and one or more of these steps can be omitted or substituted in different embodiments.

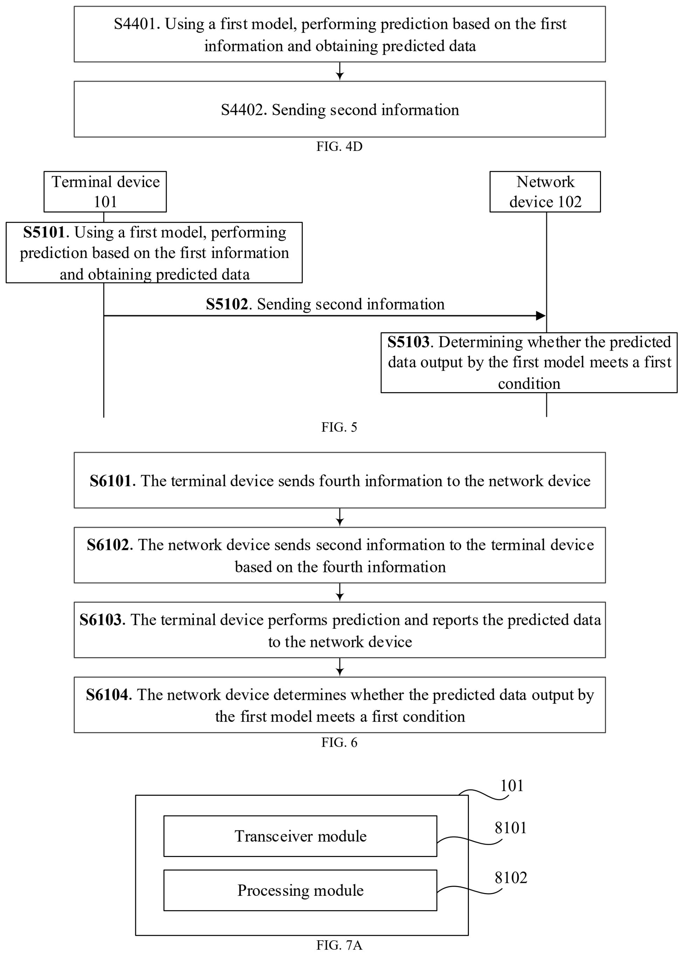

In some embodiments, other optional implementations described before or after the description corresponding to FIG. 4 can be referred to.

FIG. 4B is a schematic flowchart of a model test method according to an embodiment of the present disclosure. As shown in FIG. 4B, the embodiment of the present disclosure relates to a model test method, which can be performed by a terminal device. The method may include:
Step S4201: Obtaining first information.

Optional implementations of step S4201 can be found in step S2102 of FIG. 2A, optional implementations of step S4102 of FIG. 4A, and other related parts in the embodiments involved in FIG. 2A and FIG. 4A, which will not be repeated here.

Step S4202: Sending second information.

Optional implementations of step S4202 can be found in step S2104 of FIG. 2A, optional implementations of step S4104 of FIG. 4A, and other related parts in the embodiments involved in FIG. 2A and FIG. 4A, which will not be repeated here.

In some embodiments, the above steps are all optional steps.

In some embodiments, the embodiment shown in FIG. 4B can also be combined with at least one of steps S4101, S4105, and S4106 in the embodiment shown in FIG. 4A as a new embodiment.

FIG. 4C is a schematic flowchart of a model test method according to an embodiment of the present disclosure. As shown in FIG. 4C, the embodiment of the present disclosure relates to a model test method, which can be performed by a terminal device. The method may include:
Step S4301: Obtaining third information.

Optional implementations of step S4301 can be found in step S2106 of FIG. 2A, step S4105 of FIG. 4A, and other related parts in the embodiments of FIG. 2A and FIG. 4A, which will not be repeated here.

Step S4302: Determining whether the first model is usable.

Optional implementations of step S4302 can be found in step S2107 of FIG. 2A, step S4106 of FIG. 4A, and other related parts in the embodiments of FIG. 2A and FIG. 4A, which will not be repeated here.

In some embodiments, the above steps are all optional.

In some embodiments, the embodiment shown in FIG. 4C can also be combined with at least one of steps S4101, S4102, and S4104 in the embodiment shown in FIG. 4A as a new embodiment.

FIG. 4D is a schematic flowchart of a model test method according to an embodiment of the present disclosure. As shown in FIG. 4D, the embodiment of the present disclosure relates to a model test method, which can be performed by a terminal device. The method may include:
Step S4401: Using a first model, performing prediction based on first information, and obtaining predicted data.

Optional implementations of step S4401 can be found in step S2103 of FIG. 2A, optional implementations of step S4103 of FIG. 4A, and other related parts in the embodiments involved in FIG. 2A and FIG. 4A, and will not be repeated here.

Step S4402: Sending second information.

Optional implementations of step S4402 can be found in step S2104 of FIG. 2A, optional implementations of step S4104 of FIG. 4A, and other related parts in the embodiments involved in FIG. 2A and FIG. 4A, and will not be repeated here.

In some embodiments, the above steps are all optional.

In some embodiments, the embodiment shown in FIG. 4B can also be combined with at least one of steps S4101, S4105, and S4106 in the embodiment shown in FIG. 4A as a new embodiment.

In some embodiments, the first information is information sent from the network device to the terminal device.

In some embodiments, the second information includes the predicted data. The predicted data is configured to determine whether the first model meets a first condition, and the first condition is a performance requirement of the predicted data.

In some embodiments, the method further includes:
receiving the first information;
using the first model, performing prediction based on the first information and obtaining the predicted data includes:
   measuring the first information and obtaining the first measurement data;
   inputting the first measurement data into the first model and obtaining the predicted data output by the first model.

In some embodiments, the method further includes:
receiving third information; the third information is configured to indicate whether the first model can be used by the terminal device;
determining whether the first model can be used based on the third information.

In some embodiments, the method further includes:
sending fourth information; where the fourth information is configured to trigger the network device to send the first information, and the fourth information includes a first model identifier of the first model.

In some embodiments, the fourth information includes at least one of:
indication information for model update;
indication information for model addition;
indication information for model test.

In some embodiments, the first model is a model for performing beam prediction, and the predicted data includes a predicted signal quality of a first beam. The first beam is at least one beam configured by the network device for the terminal device.

The first condition includes a difference between the predicted signal quality and a first signal quality is within a first difference range; where the first signal quality is a signal quality of the first beam generated by the network device according to beam configuration information, or the first signal quality is a signal quality of the first beam actually measured by the terminal device.

In some embodiments, the first model is a model for performing beam prediction, and the predicted data includes a second beam obtained from the beam prediction that meets a signal condition.

The signal condition includes at least one of:
a signal quality of the second beam is greater than or equal to a preset signal quality threshold;
the second beam is a beam with the best signal quality among a plurality of beams configured by the network device for the terminal device.

In some embodiments, the first condition is that the number of times a prediction success condition is met in N beam predictions is greater than or equal to M; where N is a natural number and M is a natural number less than or equal to N; the prediction success condition is that a second beam and a third beam are the same, and the second beam is a beam that meets the signal condition and is obtained from the beam prediction;

the third beam is a beam that meets the signal condition and is determined by the network device according to beam configuration information; or, the third beam is a beam that meets the signal condition and is determined according to second measurement data, where the second measurement data is data obtained by the terminal device after the terminal device measures multiple beams configured by the network device for the terminal device.

In some embodiments, the signal quality includes at least one of: RSRP, SINR, RSSI and RSRQ.

In some embodiments, the first information includes at least one of:
first data for testing the first model; and
a first signal for testing the first model.

FIG. 5 is a schematic flowchart of a model test method according to an embodiment of the present disclosure. As shown in FIG. 5, the embodiment of the present disclosure relates to a model test method, which may include:
Step S5101: A terminal device uses a first model, performs prediction based on first information and obtains predicted data.

The first information is information sent from the network device to the terminal device.

Optional implementations of step S5101 can be found in the optional implementations of step S2103 in FIG. 2A, step S4103 in FIG. 4A, and other related parts in the embodiments involved in FIG. 2A and FIG. 4A, and will not be repeated here.

Step S5102: The terminal device sends second information to the network device.

Optional implementations of step S5102 can be found in step S2104 in FIG. 2A, step S3103 in FIG. 3A, step S4104 in FIG. 4A, and other related parts in the embodiments involved in FIG. 2A, FIG. 3A, and FIG. 4A, and will not be repeated here.

In some embodiments, the second information may include the aforementioned predicted data.

Step S5103: The network device determines whether the predicted data output by the first model meets a first condition.

Optional implementations of step S5103 can be found in step S2105 of FIG. 2A, step S3104 of FIG. 3A, and other related parts in the embodiments involved in FIG. 2A and FIG. 3A, which will not be repeated here.

In some embodiments, the above method may include the method described in the embodiments of the communication system, terminal device, network device, etc., which will not be repeated here.

FIG. 6 is a flowchart of a model test method according to an embodiment of the present disclosure. As shown in FIG. 6, the embodiment of the present disclosure relates to a model test method, which can be performed by a communication system. The method may include:

Step S6101: The terminal device sends fourth information to the network device.

The fourth information may be indication information for AI/ML model addition, indication information for AI/ML model update, or indication information for AI/ML model online test. The fourth information at least includes a first model identifier of the first model.

For example, the terminal device may send indication information for AI/ML model addition or update to the network device, or the terminal device may send indication information for AI/ML model online test to the network device. The aforementioned indication information includes at least the ID of the target model.

Step S6102: The network device sends second information to the terminal device based on the fourth information.

The second information may be data and/or signals used for online test of the target model.

For example, the network device can determine whether it needs to send data and/or signals for online test of the target model to the UE based on the received fourth information. If the target model is not in the model monitoring and management list (i.e., the model has not been trained or verified for performance), or after the network device receives the aforementioned indication information for AI/ML model online test, the network device can send second information (online test data and/or signal) to the terminal device. The data and/or signal can be determined according to different scenarios. For example, data (PDSCH) is used for CSI feedback based on the AL/ML model; a signal (CSI-RS/SSB) is used for beam management based on the AL/ML model; and a signal (PRS) is used for positioning based on the AL/ML model.

Step S6103: The terminal device performs prediction and reports the predicted data to the network device.

The predicted data can also be called the prediction result.

For example, the terminal device can use the first model to perform result prediction based on the configuration information of the test data/signals configured by the network, and report the prediction result to the network.

Step S6104: The network device determines whether the predicted data output by the first model meets a first condition.

The first condition may include a predefined performance requirement.

For example, the network device can assess whether the predefined performance requirement is met based on the reported prediction results. If met, the network device can send an indication message to the terminal device allowing the use of the target model. Upon receiving the indication message, the terminal device can add/update the first model.

In some embodiments, the network device configures a test reference signal for beam management to the terminal device. The terminal device performs inference and predicts the signal strength (L1-RSRP signal strength) of the beam based on the AI/ML model, deriving the strongest beam or beam group. The terminal device reports the predicted best beam or beam group and its signal strength to the network device. The network device assesses whether the performance requirement of the prediction result meets the predefined performance index requirement based on the prediction result reported by the terminal device. For a performance index that is RSRP signal strength precision, where signal strength precision = predicted result value - ideal value, and the ideal value is the signal strength value simulated by TE according to the configuration parameters, and the precision requirement for signal strength needs to meet the predefined performance index requirement, then the AI/ML model is considered reliable. If the performance index is prediction reliability, the prediction reliability percentage must meet a predefined prediction reliability requirement. For example, if N predictions are performed and M predictions are successful, the prediction reliability is (M/N)*100%. A successful prediction is determined by whether the best beam or beam group reported by the terminal device matches the ideal best beam or beam group simulated by the network device. If the network device determines and evaluates the prediction result of the AI/ML model as reliable, it sends indication information to the terminal device allowing the use of the model. The terminal device then adds/updates the target model based on the received indication information.

In some embodiments, the network device configures a test reference signal for beam management for the terminal device. The terminal device infers and predicts the beam signal strength (L1-RSRP signal strength) based on the AI/ML model, deriving the strongest beam or beam group. The terminal device reports the predicted best beam or beam group and its signal strength to the network device. Simultaneously, the terminal device measures the test reference signal using conventional methods and derives the strongest beam/beam group and its signal strength, reporting the predicted best beam or beam group and its signal strength to the network device. The network device evaluates whether the performance requirement of the prediction result meets the predefined performance index requirement based on the prediction result reported by the terminal device. For a performance index that is RSRP signal strength precision, where signal strength precision = predicted result value - traditional measurement value, the AI/ML model is considered reliable if the signal strength precision meets the predefined performance index requirement. If the performance index is prediction reliability, the prediction reliability percentage must meet the predefined prediction reliability requirement. For example, if N predictions are performed and M predictions are successful, the prediction reliability is (M/N)*100%. A successful prediction is determined by whether the best beam or beam group reported by the terminal device matches the best beam or beam group measured by the terminal device using traditional methods. If the network device determines and evaluates the prediction result of the AI/ML model as reliable, it sends indication information to the terminal device allowing the use of the model. The terminal device then adds/updates the target model based on the received indication information.

In some embodiments of the present disclosure, a communication system is provided, which may include a terminal device and a network device. The terminal device can perform the model test method performed by the terminal device in the foregoing embodiments of the present disclosure; the network device can execute the model test method performed by the network device in the foregoing embodiments of the present disclosure.

The present disclosure also proposes a device for implementing any of the above methods. For example, a device is proposed, including units or modules for implementing the steps performed by the terminal device in any of the above methods. Another device is proposed, including units or modules for implementing the steps performed by the network device (e.g., access network device, core network functional node, core network device, etc.) in any of the above methods.

It should be understood that the division of units or modules in the above device is only a logical functional division. In actual implementation, they can be fully or partially integrated into a single physical entity, or they can be physically separated. Furthermore, the units or modules in the device can be implemented in the form of a processor calling software: for example, the device includes a processor connected to a memory containing instructions, and the processor calls the instructions stored in the memory to implement any of the above methods or to implement the functions of the units or modules of the device. The processor is, for example, a general-purpose processor, such as a Central Processing Unit (CPU) or a microprocessor, and the memory is either internal or external to the device. Alternatively, the units or modules in the device can be implemented in the form of hardware circuits. The functions of some or all of the units or modules can be implemented through the design of the hardware circuits, which can be understood as one or more processors. For example, in one implementation, the hardware circuit is an Application-Specific Integrated Circuit (ASIC), and the functions of some or all of the units or modules are implemented through the design of the logical relationships between the components within the circuit. In another implementation, the hardware circuit can be implemented using a Programmable Logic Device (PLD), such as a Field Programmable Gate Array (FPGA), which can include a large number of logic gates. The connection relationships between the logic gates are configured through a configuration file, thereby implementing the functions of some or all of the units or modules. All units or modules of the above devices can be implemented entirely through processor-invoked software, entirely through hardware circuits, or partially through processor-invoked software with the remainder implemented through hardware circuits.

In the embodiments of the present disclosure, the processor is a circuit with signal processing capabilities. In one implementation, the processor can be a circuit with instruction read and execute capabilities, such as a Central Processing Unit (CPU), a microprocessor, a Graphics Processing Unit (GPU) (which can be understood as a microprocessor), or a Digital Signal Processor (DSP). In another implementation, the processor can implement certain functions through the logical relationships of hardware circuits. These logical relationships are fixed or reconfigurable. For example, the processor may be a hardware circuit implemented using an Application-Specific Integrated Circuit (ASIC) or a Programmable Logic Device (PLD), such as an FPGA. In a reconfigurable hardware circuit, the process of the processor loading a configuration document and configuring the hardware circuit can be understood as the processor loading instructions to implement the functions of some or all of the above units or modules. Furthermore, it can also be a hardware circuit designed for artificial intelligence, which can be understood as an ASIC, such as a Neural Network Processing Unit (NPU), a Tensor Processing Unit (TPU), or a Deep Learning Processing Unit (DPU), etc.

FIG. 7A is a schematic diagram of a structure of a terminal device according to an embodiment of the present disclosure. As shown in FIG. 7A, the terminal device 101 may include at least one of a transceiver module 8101 and a processing module 8102. In some embodiments, the processing module 8102 is configured to use a first model, perform prediction based on first information and obtain the predicted data; where the first information is information sent from a network device to the terminal device; the transceiver module 8101 is configured to send second information, where the second information includes the predicted data, the predicted data is configured to determine whether the first model meets a first condition, the first condition is the performance requirement of the predicted data. Alternatively, the transceiver module 8101 can be configured to execute at least one of the communication steps (e.g., steps S2101, S2102, S2104, S2106, but not limited thereto) performed by the terminal device 101 in any of the above methods, which will not be elaborated here. Alternatively, the processing module 8102 can be configured to execute at least one of other steps (e.g., steps S2103, S2105, S2107, but not limited thereto) performed by the terminal device 101 in any of the above methods, which will not be elaborated here.

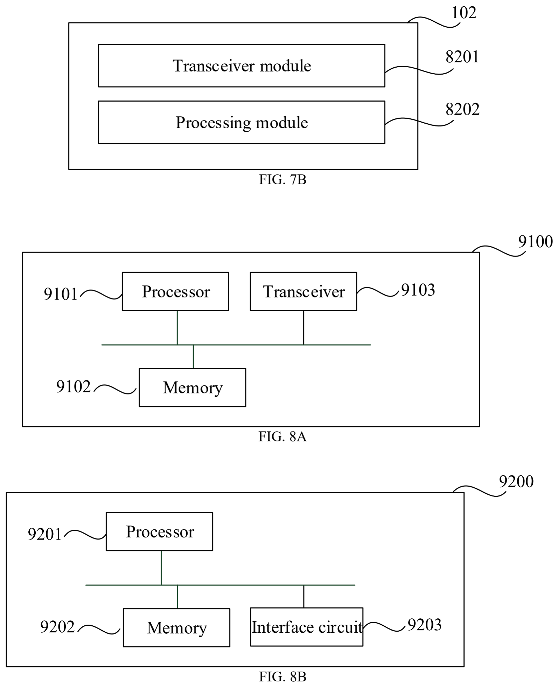

FIG. 7B is a schematic diagram of a structure of a network device according to an embodiment of the present disclosure. As shown in FIG. 7B, the network device 102 may include at least one of: a transceiver module 8201, a processing module 8202, etc. In some embodiments, the transceiver module 8201 is configured to send first information; where the first information is information for testing a first model; the processing module 8202 is configured to determine whether the predicted data output by the first model meets a first condition; where the first condition is the performance requirement of the predicted data, the predicted data is data predicted by the first model based on first measurement data, the first measurement data is data obtained by the terminal device after the terminal device measures the first information, and the first information is information sent by the network device to the terminal device. Alternatively, the transceiver module 8201 can be configured to perform at least one of the communication steps such as sending and/or receiving, etc. (e.g., steps S2101, S2102, S2104, S2106, but not limited thereto) performed by the network device 102 in any of the above methods, which will not be elaborated here. Alternatively, the processing module 8202 can be configured to perform at least one of the other steps (e.g., steps S2103, S2105, S2107, but not limited thereto) performed by the network device 102 in any of the above methods, which will not be elaborated here.

In some embodiments, the transceiver module may include a sending module and/or a receiving module, which may be separate or integrated. Alternatively, the transceiver module may be interchangeable with a transceiver.

In some embodiments, the processing module may be a single module or may include multiple sub-modules. Alternatively, the multiple sub-modules may each execute all or part of the steps required by the processing module. Alternatively, the processing module may be interchangeable with a processor.

FIG. 8A is a schematic structural diagram of a communication device 9100 according to an embodiment of the present disclosure. The communication device 9100 may be a network device (e.g., access network device, core network device, etc.), a terminal device (e.g., user equipment, etc.), or may be a chip, a chip system, or a processor that supports the network device in implementing any of the above methods, or a chip, chip system, or processor that supports the terminal device in implementing any of the above methods. The communication device 9100 can be configured to implement the methods described in the above method embodiments, and specific details can be found in the descriptions in the above method embodiments.

As shown in FIG. 8A, the communication device 9100 includes one or more processors 9101. The processor 9101 can be a general-purpose processor or a dedicated processor, such as a baseband processor or a central processing unit (CPU). The baseband processor can be configured to process communication protocols and communication data, while the CPU can be configured to control communication devices (e.g., a base station, a baseband chip, a terminal device, a terminal device chip, a DU or a CU, etc.), execute programs, and process program data. The communication device 9100 is configured to execute any of the above methods.

In some embodiments, the communication device 9100 further includes one or more memories 9102 for storing instructions. Alternatively, all or part of the memories 9102 may be located outside the communication device 9100.

In some embodiments, the communication device 9100 further includes one or more transceivers 9103. When the communication device 9100 includes one or more transceivers 9103, the transceiver 9103 performs at least one of the communication steps such as sending and/or receiving, etc. (e.g., steps S2101, S2102, S2104, S2106, but not limited thereto) in the above-described method, and the processor 9101 performs at least one of other steps (e.g., steps S2103, S2105, S2107, but not limited thereto).

In some embodiments, the transceiver may include a receiver and/or a transmitter, which may be separate or integrated. Alternatively, the terms such as transceiver, transceiver unit, transceiver machine, and transceiver circuit etc. are interchangeable. Similarly, the terms such as transmitter, transmitting unit, transmitter machine, and transmitting circuit etc. are interchangeable. The terms such as receiver, receiving unit, receiver machine, and receiving circuit etc. are interchangeable.

In some embodiments, the communication device 9100 may include one or more interface circuits. Alternatively, the interface circuit is connected to the memory 9102. The interface circuit can be configured to receive signals from the memory 9102 or other devices, and can be configured to send signals to the memory 9102 or other devices. For example, the interface circuit can read instructions stored in the memory 9102 and send the instructions to the processor 9101.

The communication device 9100 described in the above embodiments may be a network device or a terminal device, but the scope of the communication device 9100 described in the present disclosure is not limited thereto, and the structure of the communication device 9100 may not be limited to FIG. 8A. The communication device may be an independent device or may be part of a larger device. For example, the communication device may be: (1) an independent integrated circuit (IC), or chip, or chip system or subsystem; (2) a collection of one or more ICs, alternatively including storage components for storing data and programs; (3) an ASIC, such as a modem; (4) a module that can be embedded in other devices; (5) a receiver, a terminal device, a smart terminal device, a cellular phone, a wireless device, a handheld device, a mobile unit, a vehicle-mounted device, a network device, a cloud device, an artificial intelligence device, etc.; (6) others, etc.

FIG. 8B is a schematic diagram of a structure of a chip 9200 in an embodiment of the present disclosure. For cases where the communication device 9100 can be a chip or chip system, the schematic diagram of the structure of chip 9200 shown in FIG. 8B can be referred to, but it is not limited thereto.

The chip 9200 includes one or more processors 9201, and the chip 9200 is configured to perform any of the above methods.

In some embodiments, the chip 9200 further includes one or more interface circuits 9203. Alternatively, the interface circuit 9203 is connected to the memory 9202. The interface circuit 9203 can be configured to receive signals from the memory 9202 or other devices, and can also be configured to send signals to the memory 9202 or other devices. For example, the interface circuit 9203 can read instructions stored in the memory 9202 and send those instructions to the processor 9201.

In some embodiments, the interface circuit 9203 performs at least one of the communication steps such as sending and/or receiving, etc. (e.g., steps S2101, S2102, S2104, S2106, but not limited thereto) in the above-described method, and the processor 9201 performs at least one of other steps (e.g., steps S2103, S2105, S2107, but not limited thereto).

In some embodiments, the terms such as an interface circuit, an interface, a transceiver pin, a transceiver, etc., can be used interchangeably.

In some embodiments, the chip 9200 further includes one or more memories 9202 for storing instructions. Alternatively, all or part of the memories 9202 may be located outside the chip 9200.

The embodiments of present disclosure also propose a storage medium storing instructions that, when executed on the communication device 9100, cause the communication device 9100 to perform any of the above methods. Alternatively, the storage medium is an electronic storage medium. Alternatively, the storage medium is a computer-readable storage medium, but not limited thereto; it may also be a storage medium readable by other devices. Alternatively, the aforementioned storage medium may be a non-transitory storage medium, but is not limited thereto; it may also be a transitory storage medium.

The embodiments of present disclosure also provide a program product that, when executed by the communication device 9100, causes the communication device 9100 to perform any of the above methods. Alternatively, the aforementioned program product may be a computer program product.

The embodiments of present disclosure also provide a computer program that, when run on a computer, causes the computer to perform any of the above methods.

## Claims

1. A model test method, comprising:
determining whether predicted data output by a first model meets a first condition; wherein the first condition is a performance requirement of the predicted data, the predicted data is data predicted by the first model based on first measurement data, the first measurement data is data obtained after a terminal device measures first information, and the first information is information sent from a network device to the terminal device.

2. The method according to claim 1, further comprising:
receiving second information sent by the terminal device, the second information including the predicted data.

3. The method according to claim 1, further comprising:
sending third information to the terminal device; the third information indicating whether the first model is usable by the terminal device.

4. The method according to any one of claims 1 to 3, further comprising:
receiving fourth information; wherein the fourth information is configured to trigger the network device to send the first information, the fourth information comprises a first model identifier of the first model; and
determining, based on the fourth information, that the first model meets a test initiation condition, and sending the first information to the terminal device.

5. The method according to claim 4, wherein the test initiation condition comprises at least one of:
the first model has not been tested;
the first model is not in a model management set; the model management set comprises models that have already been tested; or
the fourth information is configured to indicate the execution of a test for the first model.

6. The method according to claim 4 or 5, wherein the fourth information comprises at least one of:
indication information for model update;
indication information for model addition; or
indication information for model test.

7. The method according to any one of claims 1 to 6, wherein the first model is a model for performing beam prediction, the predicted data comprises a predicted signal quality of a first beam, the first beam is at least one beam configured by the network device for the terminal device; and
the first condition comprises a difference between the predicted signal quality and a first signal quality being within a first difference range; wherein the first signal quality is a signal quality of the first beam generated by the network device according to beam configuration information, or the first signal quality is a signal quality of the first beam actually measured by the terminal device.

8. The method according to any one of claims 1 to 6, wherein the first model is a model for performing beam prediction, and the predicted data comprises a second beam that meets a signal condition and is obtained by the beam prediction;
the signal condition comprises at least one of:
a signal quality of the second beam is greater than or equal to a preset signal quality threshold;
the second beam is a beam with the best signal quality among multiple beams configured by the network device for the terminal device.

9. The method according to claim 8, wherein the first condition is that a number of times a prediction success condition is met in N beam predictions is greater than or equal to M; wherein N is a natural number, and M is a natural number less than or equal to N; the prediction success condition is that the second beam and a third beam are the same, and the second beam is a beam that meets the signal condition and is obtained by the beam prediction; and
the third beam is a beam that meets the signal condition determined by the network device according to beam configuration information; or the third beam is a beam that meets the signal condition determined according to second measurement data, and the second measurement data is data obtained by the terminal device after the terminal device measures multiple beams configured by the network device for the terminal device.

10. The method according to any one of claims 7 to 9, wherein the signal quality comprises at least one of: RSRP, SINR, RSSI and RSRQ.

11. The method according to any one of claims 1 to 12, wherein the first information comprises at least one of:
first data for testing the first model; or
a first signal for testing the first model.

12. A model test method, comprising:
using a first model, performing prediction based on first information and obtaining predicted data; wherein the first information is information sent from a network device to a terminal device; and
sending second information, the second information comprising the predicted data, the predicted data being configured to determine whether the first model meets a first condition, the first condition being a performance requirement of the predicted data.

13. The method according to claim 12, further comprising:
receiving the first information;
wherein using the first model, performing prediction based on the first information and obtaining the predicted data comprises:
measuring the first information, and obtaining first measurement data; and
inputting the first measurement data into the first model and obtaining the predicted data output by the first model.

14. The method according to claim 12 or 13, further comprising:
receiving third information; the third information being configured to indicate whether the first model is usable by the terminal device; and
determining whether the first model is usable based on the third information.

15. The method according to any one of claims 12 to 14, further comprising:
sending fourth information; wherein the fourth information is configured to trigger the network device to send the first information, and the fourth information comprises a first model identifier of the first model.

16. The method according to claim 15, wherein the fourth information comprises at least one of:
indication information for model update;
indication information for model addition; or
indication information for model test.

17. The method according to any one of claims 12 to 16, wherein the first model is a model for performing beam prediction, the predicted data comprises a predicted signal quality of a first beam, and the first beam is at least one beam configured by the network device for the terminal device;
the first condition comprises a difference between the predicted signal quality and a first signal quality being within a first difference range; wherein the first signal quality is a signal quality of the first beam generated by the network device according to beam configuration information, or the first signal quality is a signal quality of the first beam actually measured by the terminal device.

18. The method according to any one of claims 12 to 16, wherein the first model is a model for performing beam prediction, the predicted data comprises a second beam that meets the signal condition and is obtained from the beam prediction;
the signal condition comprises at least one of:
a signal quality of the second beam is greater than or equal to a preset signal quality threshold; or
the second beam is a beam with the best signal quality among a plurality of beams configured by the network device for the terminal device.

19. The method according to claim 18, wherein the first condition is that a number of times a prediction success condition is met in N beam predictions is greater than or equal to M; wherein N is a natural number and M is a natural number less than or equal to N; the prediction success condition is that the second beam and a third beam are the same, and the second beam is a beam that meets the signal condition and is obtained from the beam prediction;
the third beam is a beam that meets the signal condition and is determined by the network device according to beam configuration information; or the third beam is a beam that meets the signal condition and is determined according to second measurement data, and the second measurement data is data obtained by the terminal device after the terminal device measures multiple beams configured by the network device for the terminal device.

20. The method according to any one of claims 17 to 19, wherein the signal quality comprises at least one of: RSRP, SINR, RSSI and RSRQ.

21. The method according to any one of claims 12 to 20, wherein the first information comprises at least one of:
first data for testing the first model; or
a first signal for testing the first model.

22. A model test method, comprising:
a terminal device using a first model, performing prediction based on first information and obtaining predicted data; wherein the first information is information sent from a network device to the terminal device;
the terminal device sending second information to the network device, the second information comprising the predicted data, the predicted data being configured to determine whether the first model meets a first condition, the first condition being a performance requirement of the predicted data; and
the network device determining whether the predicted data output by the first model meets the first condition; wherein the predicted data is data obtained by the first model based on first measurement data, the first measurement data is data obtained by the terminal device after the terminal device measures the first information, and the first information is information sent from the network device to the terminal device.

23. A network device, comprising:
a processing module configured to determine whether predicted data output by a first model meets a first condition; wherein the first condition is a performance requirement of the predicted data, the predicted data is data predicted by the first model based on first measurement data, the first measurement data is data obtained after the terminal device measures first information, and the first information is information sent by the network device to the terminal device.

24. A terminal device, comprising:
a processing module configured to use a first model, perform prediction based on first information and obtain predicted data; wherein the first information is information sent by a network device to the terminal device; and a transceiver module configured to send second information, wherein the second information comprises the predicted data, the predicted data is configured to determine whether the first model meets a first condition, the first condition is a performance requirement of the predicted data.

25. A network device, comprising:
one or more processors;
wherein the terminal device is configured to execute the model test method according to any one of claims 1 to 11.

26. A terminal device, comprising:
one or more processors;
wherein, the network device is configured to execute the model test method according to any one of claims 12 to 21.

27. A communication system, comprising a terminal device and a network device, wherein the network device is configured to implement the model test method according to any one of claims 1 to 11, and the terminal device is configured to implement the model test method according to any one of claims 12 to 21.

28. A storage medium storing instructions, wherein when the instructions are executed on a communication device, the communication device is configured to execute the model test method according to any one of claims 1 to 11 or claims 12 to 21.
